# FASCICULE DE BREVET EUROPEEN

(11) **EP 0 452 206 B1**
(45) Date de publication et mention de la délivrance du brevet: **12.10.1994**
(21) Numéro de dépôt: 91400947.7
(22) Date de dépôt: 09.04.1991
(51) Int. Cl.: C03B 35/20, C03B 23/031, C03B 27/056

(54) **Dispositif de support et de bombage de feuilles de verre et application à la production de vitrages bombés trempés**
Vorrichtung zum Tragen und Biegen von Glasscheiben und Anwendung zur Herstellung von gebogenen gehärteten Glasscheiben
Apparatus for supporting and bending glass-sheets and application for making curved tempered glass-sheets

(30) Priorité: 13.04.1990 FR 9004806
(43) Date de publication de la demande: 16.10.1991
(73) Titulaire: SAINT-GOBAIN VITRAGE INTERNATIONAL, 92400 Courbevoie (FR)
(72) Inventeur: Arnould, Jean, F-91370 Verrieres le Buisson (FR); Pommera, Christian, F-02310 Charly sur Marne (FR)
(74) Mandataire: Menes, Catherine

(56) Documents cités:
- DE-C- 708 637
- DE-C- 714 497
- DE-C- 734 153
- FR-A- 858 598
- FR-A- 1 455 984
- FR-A- 2 403 307

## Description

L'invention a trait au support de feuilles de verre en position verticale ou sensiblement verticale lors de différents traitements auxquels les feuilles de verre sont soumises en vue d'un bombage et/ou d'une trempe tels notamment le réchauffage, le bombage par exemple par pressage, la trempe thermique et le transport entre les différents postes de traitement.

L'invention a également trait à un dispositif de bombage par pressage coopérant avec un dispositif-support selon l'invention. Elle s'applique notamment à la production de vitrages bombés-trempés de grandes dimensions présentant une très forte courbure.

Dans le domaine des vitrages bombés-trempés, les critères de qualité aujourd'hui les plus souvent exigés sont une stricte conformité au galbe prescrit, un degré de trempe correspondant à l'accroissement souhaité de la résistance mécanique en vue d'assurer également une fragmentation conforme aux normes de sécurité, une qualité optique excluant tout effet de moirage et enfin une absence totale de toute empreinte laissée par les outils utilisés lors des différents traitements et notamment une absence de marques de pinces qui dans les traitements pratiqués verticalement soutiennent le vitrage.

Cette dernière exigence a favorisé le développement des procédés de bombage-trempe opérant sur une feuille de verre maintenue horizontale ou sensiblement horizontale. Toutefois, il est impossible de convertir une installation verticale en une installation horizontale ; or les lignes de production traditionnelles sont du type vertical et à l'exception du problème des marques de pinces n'ont absolument rien d'obsolète si on examine la qualité des vitrages produits, la diversité et la complexité des formes que ces procédés en vertical autorisent.

De multiples publications font état de moyens de maintien des feuilles de verre sensés n'agir que sur la tranche des feuilles de verre. Il est ainsi connu, par exemple des brevets US-A-2 134 797 ou US-A-2 537 803, un procédé de bombage selon lequel les feuilles de verre sont disposées dans un cadre qui les retient par des séries de taquets ou de fourchettes appuyant sur les différents côtés du vitrage. Il a été également proposé dans le brevet US-A-3 298 809 de faire reposer le bord inférieur de la feuille de verre sur la traverse horizontale d'un cadre et de retenir le bord supérieur par une barre d'appui coopérant avec des pièces de verrouillage.

Le problème fondamental de tous ces moyens de maintien est que la feuille de verre peut très facilement s'en détacher, le maintien étant obtenu simplement en renforçant la stabilité de la position d'équilibre vertical, et ceci est d'autant plus vrai que ces moyens de maintien sont généralement de petites dimensions, pour ne pas perturber le réchauffage et/ou le refroidissement lors de la trempe thermique. De plus, le pincement par taquets n'est possible que si la feuille de verre exerce effectivement une contre-action, ce qui suppose qu'elle ne s'affaisse ou ne se cintre pas trop lors de son réchauffage.

Le brevet européen EP-B-126 687 propose un cadre dont les moyens de maintien s'appliquant sur la tranche supérieure de la feuille de verre sont montés librement suivant la direction verticale, moyennant un guidage latéral. Ces moyens de maintien, par exemple du type pistons, peuvent ainsi accompagner la feuille de verre et continuer à la retenir même lorsqu'elle commence à s'affaisser. Par ailleurs, ces moyens de maintien peuvent être couplés avec des pinces dont les mors ne se referment que si la feuille de verre s'échappe du piston, ce qui permet de rattraper ladite feuille, d'en éviter la chute et le bris, de la retirer du four et de ne pas encombrer celui-ci par des débris de verre.

En pratique le cadre selon EP-B-126 687 donne de bons résultats avec de petits vitrages, c'est-à-dire plus précisément avec des vitrages dont la hauteur est inférieure à 600 mm. Au-delà d'une telle hauteur, l'affaissement lors du chauffage est trop important et les mors interviennent presque systématiquement pour saisir les feuilles de verre, ce qui permet, certes de les sortir de l'installation de bombage-trempe, mais non d'éviter les marques de pinces.

Même si peu de vitrages ont effectivement toutes leurs dimensions supérieures à 600 mm, il n'est pas rare que la forme souhaitée impose une disposition du vitrage dans le cadre telle que sa hauteur soit confondue avec sa plus grande dimension qui est fréquemment supérieure à 1000 mm. Le problème se pose notamment lorsque le vitrage comporte au moins une partie très repliée qui nécessite l'utilisation d'une presse de bombage dont le moule femelle est constitué d'éléments assemblés les uns aux autres et pivotant autour des axes d'assemblage, l'élément médian étant tout d'abord le seul à être appliqué contre la feuille de verre et l'opération de pressage se poursuivant par l'application progressive des éléments latéraux. On conçoit facilement que si on ne veut pas que le verre se vrille ni même ne glisse lors du pressage (et ces phénomènes entraîneraient la chute du vitrage au pire, et dans le plus favorable des cas des défauts de galbe et la formation de défauts optiques), il est indispensable que les axes de pivotement soient verticaux. Autrement dit la forme souhaitée après bombage détermine l'orientation du vitrage dans le cadre.

La présente invention a pour but un nouveau support de feuilles de verre en position verticale ou sensiblement verticale, apte au maintien de feuilles de verre lors de différents traitements liés aux opérations de bombage et/ou de trempe, même si la hauteur des feuilles de verre est supérieure à 600 mm et cela, sans générer de marques de pinces ou des défauts optiques dus à une trop forte perturbation des opérations de chauffage et de trempe thermique.

Ce but est atteint par un dispositif-support de feuilles de verre en position verticale ou sensiblement verticale, servant à leur maintien lors de différents traitements liés aux opérations de bombage et/ou de trempe, caractérisé en ce qu'il est constitué par une ou plusieurs traverses, sur lesquelles repose la tranche inférieure de la feuille de verre, chaque traverse étant suspendue à un palonnier par un ou plusieurs couples de haubans longeant les deux faces opposées de la feuille de verre.

A l'opposé des dispositifs-supports connus de l'art, le dispositif selon l'invention ne comporte pas nécessairement de moyens agissant sur la tranche supérieure de la feuille de verre qui est simplement posée sur sa tranche inférieure et est retenue latéralement par les haubans, si elle s'écarte de sa position d'équilibre vertical ou se gondole lors de son réchauffage. Avec de tels haubans qui encagent la feuille de verre, et quelle que puisse être sa hauteur, on écarte tout risque de chute de la feuille de verre lors de son réchauffage dans le four et toutes opérations ultérieures notamment de trempe, sans pour autant gêner ledit processus de trempe, les haubans étant suffisamment minces et distants de la feuille de verre pour ne pas perturber le refroidissement intense par soufflage d'air froid. De plus, même si par accident la feuille de verre est brisée lors de la trempe, par exemple en raison d'un mauvais façonnage après la découpe, les haubans suffisent le plus souvent à retenir les morceaux de verre et à éviter qu'ils ne se dispersent dans toute l'installation. Par ailleurs, du fait que l'amplitude des mouvements de la feuille de verre dans cette sorte de cage est extrêmement faible - et que de plus le dispositif-support est tout particulièrement destiné à des vitrages dont la hauteur est grande et généralement supérieure à 600 mm, la réaction horizontale exercée par les haubans est d'une intensité très faible, ce qui limite les phénomènes de marquage.

Pour supprimer totalement ce risque de marquage on évite de préférence tout contact direct entre le verre et les haubans grâce à des espaceurs. Ces espaceurs sont par exemple des patins souples ne marquant pas le verre chaud ; selon un mode de réalisation particulièrement préféré de l'invention, les espaceurs sont constitués par des manchons faits d'une étoffe en tissu résistant à la chaleur, par exemple en tissu à base d'amiante ou de manière préférée un feutre en fibres métalliques, enfilés sur les haubans. Le nombre et l'emplacement des espaceurs peuvent être aisément déterminés après un ou deux essais qui permettent de déterminer la localisation des éventuels défauts ; en pratique, on utilise environ un manchon tous les 20 centimètres en veillant tout particulièrement à en disposer près des bords du vitrage. De manière avantageuse, des patins similaires faits par exemple d'un tissu en fibres de silice sont également utilisés comme intercalaires entre les traverses et la tranche inférieure de la feuille de verre.

Un second avantage du recours à ces espaceurs est qu'ils permettent de tolérer des forces de réaction des haubans légèrement plus grandes et par conséquent de diminuer le nombre de ces haubans, ce qui limite d'autant les problèmes dus à d'éventuelles différences de dilatation entre les différents haubans.

Les haubans ne sont pas nécessairement bien tendus lorsque le dispositif-support est à vide, le poids des feuilles de verre suffisant largement à exercer la tension requise pour éviter que les haubans ne frottent de manière permanente contre le verre.

Le dispositif-support selon l'invention peut être utilisé simplement pour la production de vitrages plans trempés, sans étape de bombage, ou encore pour l'obtention de vitrages bombés au moyen de simples cadres de pressage ouverts en leur centre. Toutefois, il est tiré profit au mieux d'un tel dispositif-support s'il est utilisé pour la mise en oeuvre d'un procédé de bombage par pressage au moyen de formes pleines, éventuellement constituées par des éléments pivotant autour de leurs axes d'assemblage.

Dans ce cadre, l'invention propose une modification des formes de pressage, en l'espèce le creusement des surfaces d'appui sur la feuille de verre afin de définir des méplats dans lesquels les haubans du dispositif-support vont pouvoir se loger lors de la fermeture de la presse, ceci bien sûr pour éviter que les haubans ne soient pressés contre la feuille de verre ce qui la marquerait inéluctablement.

Selon un mode de réalisation plus spécialement préféré, les méplats sont largement surdimensionnés, en largeur et en profondeur. On constate en effet, que ce surdimensionnement ne nuit pas à la qualité optique des vitrages, alors qu'en revanche, il accroît les tolérances quant aux écarts de positionnement des haubans ou autrement dit permet d'accepter, éventuellement, une plus forte dilatation de haubans et/ou une légère erreur quant aux points de suspension des haubans sur les palonniers.

L'invention s'applique tout particulièrement bien à la production de vitrines d'exposition notamment pour les produits alimentaires ou des articles de bijouterie ; dans ce cas les vitrages à réaliser comportent généralement deux parties planes - et devant être rigoureusement exempte de défauts de planéité compte tenu de l'application envisagée - qui sont séparées par une partie cylindrique à très petit rayon de courbure.

De tels articles sont avantageusement produits à l'aide d'une presse de bombage dont la forme femelle comporte une aile pivotante qui rabat la partie correspondante du vitrage sur la forme mâle. Dans ce cas, on utilise avantageusement un dispositif-support comportant deux traverses, chaque traverse étant suspendue à un palonnier, de préférence par au plus deux couples de haubans et avantageusement par un seul couple de haubans et supportant une des deux parties du vitrage, le palonnier correspondant à la partie repliée étant avantageusement susceptible de pivoter pour suivre les mouvements de la feuille de verre.

L'invention se rapporte aussi aux applications selon les revendications 14 et 15.

D'autres détails et caractéristiques avantageuses de l'invention ressortent de la description d'un mode particulier de réalisation de l'invention, faite en référence aux dessins annexés qui représentent :
· **figure 1** : un schéma en vue de face d'un dispositif-support selon l'invention,
· **figure 2** : un détail du mode de fixation des haubans de la figure 1,
· **figure 3** : une vue en perspective d'une presse de bombage selon l'invention utilisée avec le dispositifsupport de la figure 1.

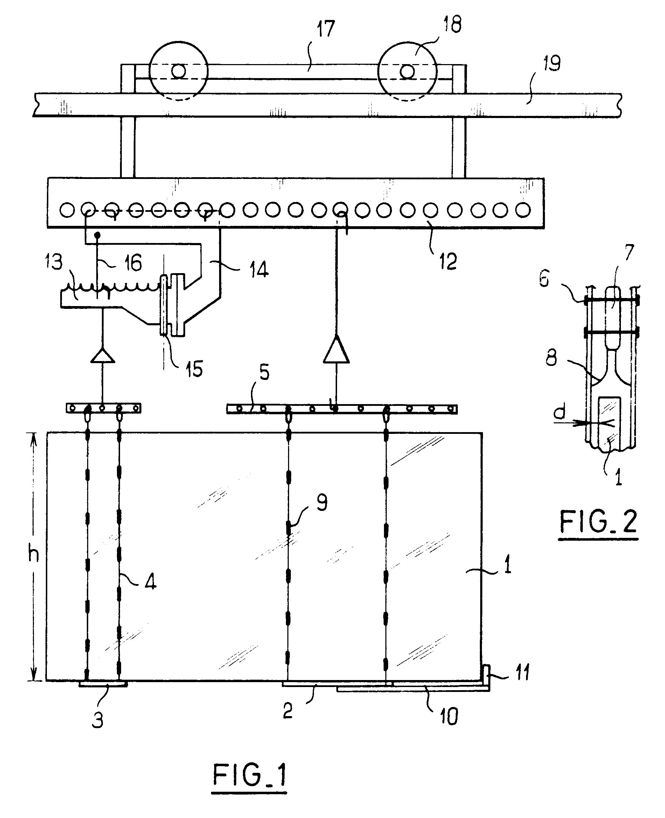

La figure 1 est une vue schématique d'un dispositifsupport conforme à un premier mode de réalisation de l'invention. La feuille de verre 1, ici rectangulaire, et présentant une hauteur h de par exemple 1000 mm et une épaisseur d'environ 6 mm, est maintenue en position verticale ou sensiblement verticale par l'action conjuguée de traverses 2 et 3 et de haubans 4. Les traverses 2 et 3 sont suspendues aux haubans 4 qui passent de chaque côté de la feuille de verre 1 en formant une sorte de cage. L'extrémité supérieure des haubans 4 est rattachée à des balancelles 5. Les haubans 4 doivent être en mesure de supporter le poids de la feuille de verre et de résister aux températures du four et des opérations de bombage. On peut utiliser à cet effet des fils de 3 à 4 mm de diamètre, en acier réfractaire par exemple du type inox, alliage ferchrome-aluminium ou alliage nickel-chrome. De très bons résultats ont été également obtenus avec un alliage peu sensible au fluage à chaud par exemple un alliage du type APM fourni par la société Kanthal de droit suédois et élaboré par Métallurgie des poudres. Les haubans 4 sont maintenus sous tension par le propre poids de la feuille de verre.

Comme représenté figure 2, les haubans 4 sont par exemple fixés par des vis 6 à une attache 7 munie de fourches 8 qui définissent un écart d entre la feuille de verre 1 et les haubans 4. Cet écart est avantageusement choisi de l'ordre de 2 mm. Cet écart est également assuré par une série d'espaceurs 9 répartis sur toute la longueur des haubans. Ces espaceurs sont constitués par des patins réalisés dans un matériau assez mou, pour mieux amortir les efforts, ne marquant pas le verre et susceptible de résister à haute température et notamment à une température de l'ordre de 650° C. L'emploi de manchons faits d'un feutre en fibres métallique à base d'INCONEL, enfilés sur les haubans 4 donne toute satisfaction et de plus le système de manchonnage permet de modifier de manière simple la position des patins 9 en fonction de la localisation d'éventuels défauts. En règle générale, il suffit d'un patin 9 tous les 15-20 cm, avec systématiquement un patin près des bords de la feuille de verre 1. Le même feutre ou de préférence un feutre blanc en fibres de silice est éventuellement employé comme intercalaire entre les traverses 2, 3 et la tranche inférieure de la feuille de verre. Il est à noter que ces patins 9 jouent un rôle également lors de la trempe thermique par soufflage d'air froid, car ils permettent une bonne circulation du gaz de refroidissement. On peut également utiliser des fils entièrement gainés à l'aide d'un tissu céramique.

Les traverses 2 et 3 n'ont nul besoin de couvrir toute la longueur de la feuille de verre 1, leur longueur doit simplement être suffisante pour un espacement adéquat des différents haubans 4 qui les retiennent. A la limite, chaque traverse peut ne recevoir qu'un seul couple de haubans et être très courte. Toutefois, l'opération de chargement de la feuille de verre 1 est simplifiée si l'équilibre s'obtient assez rapidement, de sorte que même dans ce cas, il peut être préférable d'utiliser des traverses d'au moins 10 cm de long. Pour centrer la feuille de verre 1, on prolonge une des traverses par une barre 10 munie d'un talon 11 sur lequel vient s'appuyer un bord latéral. Par le jeu du positionnement des haubans sur les balancelles 5 et/ou des contre-poids judicieusement placés, on fait en sorte que l'ensemble soit bien en équilibre.

Les balancelles 5 sont reliées à un palonnier 12 constitué par une poutre munie d'une série de trous constituant autant de points d'accrochage. La balancelle de droite est accrochée directement à ce palonnier 12. Par contre, la balancelle de gauche - qui correspond à la partie du vitrage devant être repliée - est accrochée à une crémaillère 13. Cette crémaillère 13 est fixée à un support 14 accroché au palonnier 12. Une articulation 15 permet de faire pivoter la crémaillère 13 dans un plan horizontal, une tige-butée 16 interdisant la rotation d'un côté.

Le palonnier 12 est lui-même porté par un chariot 17 dont les roues 18 sont guidées par un rail 19 qui transporte la feuille de verre 1 maintenue par son dispositif-support dans le four et les autres installations de bombage et/ou de trempe. Quoique non représentés sur cette figure 1, des moyens sont également prévus pour bloquer le chariot 17 et déplacer verticalement le rail 19, une installation de bombage-trempe comportant typiquement une installation latérale de chargement des feuilles de verre, un four en fosse au-dessus duquel sont disposés les outils de bombage et à un troisième niveau, au-dessus des outils de bombage, les caissons de soufflage de trempe.

Le schéma de la figure 1 ne concerne qu'un des modes de réalisation possibles du dispositif-support selon l'invention et une série d'autres variations peuvent être effectuées au nombre desquelles figure notamment le mode de rattachement au palonnier principal, étant entendu par l'homme de l'art, que le verre n'est jamais retenu par plus d'un point fixe sur le palonnier et que les autres points sont flottants. L'utilisation du palonnier pivotant n'est bien sûre requise que si la feuille de verre doit subir une pliure assez importante. La plus importante modification concerne le nombre des traverses et des haubans. Pour ce qui concerne les traverses, ce nombre est fixé par le nombre de parties du vitrage, ou autrement dit, une traverse pour un vitrage plan ou très légèrement cintré, deux traverses pour une ligne de pliure (cas des couvercles de cuisinières ou des vitrines) et trois traverses pour deux lignes de pliure (vitrage en forme de U). A chaque traverse correspondent avantageusement au plus deux couples de haubans et si possible un seul couple de haubans - en sachant néanmoins qu'il est préférable de prévoir au moins deux couples de haubans par vitrage.

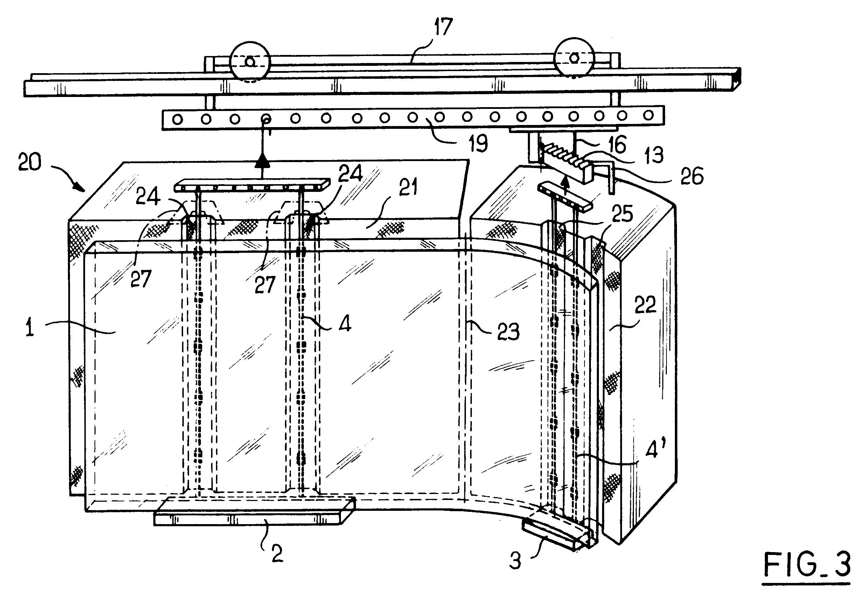

La figure 3 est une illustration d'un usage plus particulièrement avantageux du cadre-support schématisé figure 1. Sur cette figure 3, est représentée la feuille de verre 1 en cours de conformation à l'aide d'une presse de bombage constituée de deux formes complémentaires de bombage, la forme mâle n'ayant pas été représentée par souci de clarté. La forme femelle 20 comporte deux éléments 21 et 22. L'élément principal 21 présente une surface de conformation (c'est-à-dire une surface d'appui sur la feuille de verre) revêtue d'un tissu ou feutre en fibres réfractaires qui recouvre également la surface de l'élément 22 et de la contre-forme mâle, les éléments 21 et 22 constituant la forme femelle peuvent être plans ou incurvés selon une courbure généralement cylindrique, en fonction du type de vitrage réalisé. Les deux éléments 21 et 22 sont articulés l'un sur l'autre autour d'un axe de pivotement 23 positionné de manière à ce que l'élément pivotant 22 ne frotte pas sur le verre lors du pliage. Des moyens, ici non représentés, sont prévus pour ouvrir et fermer la presse et pour faire pivoter l'élément 22.

La feuille de verre l est supportée par les traverses 2 et 3 suspendues aux haubans 4. Pour éviter que ces derniers ne marquent le verre lors de la phase de pressage, la surface des éléments 21 et 22 est creusée par des méplats 24 et 25. De préférence, ceux-ci sont très largement surdimensionnés et présentent par exemple une largeur égale à plus de dix fois le diamètre des haubans et une profondeur au moins égale à deux fois ce diamètre et de préférence à trois fois ce diamètre.

L'opération de bombage se déroule de la manière suivante : dès que la feuille de verre 1 préalablement réchauffée à la température idoine est correctement positionnée entre les formes de bombage, on rapproche la forme de bombage mâle et la forme de bombage femelle, de sorte que l'élément principal vienne appliquer le verre contre l'élément mâle. Juste avant d'effectuer ce pressage, on peut observer qu'une feuille de verre de plus de 600 mm de hauteur (et dans un cas précis de 1200 mm de hauteur pour 6 mm d'épaisseur) est gondolée, mais pour autant parfaitement maintenue par le dispositif-support. Pendant le pressage les haubans se rangent dans les méplats 25.

Cette opération terminée, on fait pivoter l'élément 22 qui vient progressivement rabattre l'aile de la feuille de verre en débutant par sa partie située à proximité de l'axe de pivotement et en terminant par le bord de la feuille de verre. Un guidon 26 solidaire de l'élément 22 repousse la crémaillère 13 articulée, de sorte que le verre n'est pas en porte-à-faux. Les haubans 4' auxquels est suspendue la traverse 3 trouvent également place dans des méplats 25 prévus à cet effet.

Le pressage terminé, la presse est ouverte et la feuille de verre est placée entre des caissons de soufflage de trempe. Il est apparu que les haubans du dispositifsupport selon l'invention ne gênent absolument pas le processus de refroidissement et qu'au contraire les taux de casse sont plutôt inférieurs à ce qu'ils sont avec des dispositifs-supports selon l'art, dont les pinces ont tendance à être génératrices de défauts dans le vitrage, défauts sensibles à la trempe.

Ce procédé a notamment permis la réalisation de vitrines bombées sans aucune marque de pinces constituées par deux parties plates, respectivement de 167 et 681 mm de longueur, séparées par une pliure formant un angle de 56° et ayant un rayon de courbure de 114 mm, l'axe d'articulation étant parallèle à la hauteur du vitrage. Des tolérances de galbe inférieures à + 2,5 mm ont été respectées pour des hauteurs allant de 620 mm à 1245 mm.

On a également réalisé avec succès et selon les mêmes tolérances une vitrine en U comportant trois plats de respectivement 169, 474 et 97 mm, avec des pliures respectivement à 66° (rayon de courbure de 100 mm) et à 24° (rayon de courbure de 500 mm) et dont la hauteur totale est de 1267 mm.

Ces vitrages bombés de grandes dimensions sont donnés ici en exemple parce qu'ils sont particulièrement difficiles ou même impossibles à fabriquer avec la même qualité et surtout sans marques, avec les dispositifs antérieurs ; mais bien entendu, le dispositif selon l'invention permet également de traiter des vitrages de plus petites dimensions.

Nous avons indiqué plus haut que les méplats creusés dans les formes de pressage sont de préférence très larges pour assurer un logement aux haubans. Néanmoins, des déformations optiques peuvent apparaître dans quelques cas - notamment lorsque le bombage procède plus par emboutissage que par pliage. Il est alors préférable de limiter la largeur des méplats à environ 10-15 mm et de guider les haubans par des centreurs de fils, par exemple des V 27 montés sur la partie femelle de la presse. Ces centreurs sont également utilisés pour la réalisation de vitrages comportant deux pliages qui peuvent alors nécessiter l'emploi de deux crémaillères articulées fixées au palonnier. Dans ce cas, le bon équilibre de l'attelage ne peut être conservé qu'en supprimant le point d'ancrage central ce qui génère au cours du pliage une légère translation latérale du haut des haubans par rapport au verre d'où une difficulté pour loger correctement les haubans, difficulté levée par l'emploi du centrage.

Le procédé selon l'invention permet non seulement la suppression de toute marque de pinces mais aussi une meilleure conformité au galbe due à l'absence de glissements au niveau des pinces et à l'absence d'allongement du verre.

Ce dernier point est tout spécialement avantageux dans le cas de feuilles de verre munies d'une couche mince, par exemple un revêtement pyrolitique d'oxyde d'étain et éventuellement d'oxyde d'indium car le procédé selon l'invention limite les contraintes exercées sur le verre donc les dégradations que celles-ci peuvent éventuellement entraînées.

## Revendications

1. Dispositif-support de feuilles de verre (1) en position verticale ou sensiblement verticale, servant à leur maintien lors de différents traitements liés aux opérations de bombage et/ou de trempe, **caractérisé en ce qu'**il est constitué par une ou plusieurs traverses (2, 3), sur lesquelles repose la tranche inférieure de la feuille de verre (1), chaque traverse étant suspendue à un palonnier (12) par un ou plusieurs couples de haubans (4) longeant les deux faces opposées des feuilles de verre.

2. Dispositif-support de feuilles de verre selon la revendication 1, **caractérisé en ce que** des patins (9) souples sont intercalés entre la traverse (2, 3) et la feuille de verre.

3. Dispositif-support de feuilles de verre selon la revendication 1 ou 2, **caractérisé en ce que** les haubans (4) sont maintenus distants des faces de la feuille de verre par des espaceurs (9).

4. Dispositif-support de feuilles de verre selon la revendication 3, **caractérisé en ce que** les espaceurs (9) sont constitués par des manchons faits d'un tissu ou feutre résistant à la chaleur.

5. Dispositif-support de feuilles de verre selon la revendication 4, **caractérisé en ce que** ledit tissu résistant à la chaleur est à base d'amiante ou de fibres céramiques réfractaires.

6. Dispositif-support de feuilles de verre selon l'une des revendications précédentes, **caractérisé en ce que** les haubans (4) sont tendus par le poids de la feuille de verre (1).

7. Dispositif-support de feuilles de verre selon l'une des revendications précédentes, **caractérisé en ce que** les haubans (4) sont des fils en acier réfractaire, notamment en acier inox ou dans un alliage nickel-chrome.

8. Dispositif-support de feuilles de verre selon l'une des revendications précédentes, **caractérisé en ce qu'**il comporte au moins un palonnier (13) articulé.

9. Dispositif de bombage de feuilles de verre, dans lequel la feuille de verre (1) est maintenue par un dispositif-support selon l'une des revendications 1 à 8 constitué d'une presse de bombage verticale dont les formes ont des surfaces d'appui sur la feuille de verre creusées par des méplats (25, 26) dans lesquels viennent se loger les haubans (4).

10. Dispositif de bombage de feuilles de verre selon la revendication 9, **caractérisé en ce que** les méplats (25, 26) ont une largeur au moins égale à cinq fois le diamètre des haubans (4) et de préférence d'au moins dix fois le diamétre des haubans.

11. Dispositif de bombage de feuilles de verre selon la revendication 10, **caractérisé en ce que** les méplats (25, 26) ont une profondeur au moins égale à deux fois le diamètre des haubans (4) et de préférence d'au moins trois fois le diamètre desdits haubans (4).

12. Dispositif de bombage de feuilles de verre suivant la revendication 9, dans lequel la feuille de verre (1) est maintenue par un dispositif-support suivant la revendication 8, comportant deux traverses (2, 3) suspendues par au plus quatre couples de haubans (4, 4') et de préférence par deux couples de haubans (soit un couple par traverse), **caractérisé en ce que** la forme de bombage femelle (20) comporte deux éléments pivotants l'un par rapport à l'autre, un premier élément (21) venant presser la partie principale de la feuille de verre et le second élément (22) rabattant ensuite l'aile sur la partie mâle, **et en ce qu'**une traverse (2, 3) est associée à chaque partie de la feuille de verre, la traverse (3) suspendue à un palonnier pivotant étant affectée à l'aile.

13. Dispositif de bombage selon l'une des revendications 9 à 12, **caractérisé par** des dispositifs de centrage (27) montés sur les presses et destinés au guidage des haubans (4).

14. Application du dispositif selon l'une des revendications 9 à 13 au bombage de feuilles de verre dont la hauteur est supérieure à 600 mm.

15. Application du dispositif selon l'une des revendications 9 à 13 à la fabrication d'articles en verre trempé, exempts de marques de pinces comportant au moins une surface cylindrique dont le rayon est inférieur à 150 mm.

16. Application selon la revendication 15, **caractérisé en ce que** ladite surface cylindrique est entourée de deux parties planes.

## Claims

1. Support device for glass sheets (1) in a vertical or substantially vertical position, serving for holding them during various treatments associated with the operations of bending and/or toughening, characterized in that it is composed of one or more cross-beams (2, 3), on which the lower edge face of the glass sheet (1) rests, each cross-beam being suspended from a lifting beam (12) by one or more pairs of stays (4) running down the two opposite faces of the glass sheet.

2. Support device for glass sheets according to Claim 1, characterized in that flexible skids (9) are inserted between the cross-beam (2, 3) and the glass sheet.

3. Support device for glass sheets according to Claim 1 or 2, characterized in that the stays (4) are kept spaced away from the faces of the glass sheet by spacers (9).

4. Support device for glass sheets according to Claim 3, characterized in that the spacers (9) are made of sleeves formed of a heat-resistant fabric or felt.

5. Support device for glass sheets according to Claim 4, characterized in that said heat-resistant fabric is based upon asbestos or refractory ceramic fibres.

6. Support device for glass sheets according to one of the preceding Claims, characterized in that the stays (4) are held tight by the weight of the glass sheet (1).

7. Support device for glass sheets according to one of the preceding Claims, characterized in that the stays (4) are wires of refractory steel, notably of stainless steel or a nickel-chrome alloy.

8. Support device for glass sheets according to one of the preceding Claims, characterized in that it comprises at least one articulated lifting beam (13).

9. Device for bending glass sheets, in which the glass sheet (1) is held by a support device according to one of Claims 1 to 8, constituted of a vertical bending press, the moulds of which have bearing surfaces against the glass sheet recessed by flats (25, 26), in which the stays (4) are seated.

10. Device for bending glass sheets according to Claim 9, characterized in that the flats (25, 26) have a width at least equal to five times the diameter of the stays (4) and preferably at least ten times the diameter of the stays.

11. Device for bending glass sheets according to Claim 10, characterized in that the flats (25, 26) have a depth at least equal to twice the diameter of the stays (4) and preferably at least three times the diameter of the said stays (4).

12. Device for bending glass sheets according to Claim 9, in which the glass sheet (1) is held by a support device according to Claim 8, comprising two cross-beams (2, 3), suspended by at most four pairs of stays (4,4') and preferably by two pairs of stays (or one pair per cross-beam), characterized in that the female bending mould (20) comprises two elements pivotal with respect to each other, a first element (21) pressing the principal part of the glass sheet and the second element (22) then folding over the flange onto the male part, and in that a cross-beam (2, 3) is associated with each part of the glass sheet, the cross-beam (3) suspended from a pivoting lifting beam being associated with the flange.

13. Bending device according to one of Claims 9 to 12, characterized by centering devices (27) mounted on the presses and intended for guiding the stays (4).

14. Application of the device according to one of Claims 9 to 13 to the bending of glass sheets having a height greater than 600 mm.

15. Application of the device according to one of Claims 9 to 13 to the production of articles of toughened glass, free from tongs marks, comprising at least one cylindrical surface having a radius of curvature less than 150 mm.

16. Application according to claim 15, characterized in that said cylindrical surface is flanked by two plane portions.

## Patentansprüche

1. Vorrichtung für das Halten von Glasscheiben (1) in senkrechter oder im wesentlichen senkrechter Position, welche zu deren Halten während der verschiedenen Behandlungen dient, die mit den Arbeitsgängen des Biegens und/oder Vorspannens verbunden sind, **dadurch gekennzeichnet, daß** sie aus einem oder mehreren Traversen (2, 3) gebildet ist, auf denen der untere Rand der Glasscheibe (1) ruht, wobei jede Traverse über ein oder mehrere Paare von Halteseilen (4), die über die beiden einander gegenüberliegenden Seiten der Glasscheiben laufen, an einer Tragschiene (12) hängt.

2. Vorrichtung für das Halten von Glasscheiben nach Anspruch 1, **dadurch gekennzeichnet, daß** zwischen den Traversen (2, 3) und die Glasscheibe nachgiebige Auflagen (9) eingelegt sind.

3. Vorrichtung für das Halten von Glasscheiben nach Anspruch 1 oder 2, **dadurch gekennzeichnet, daß** die Halteseile (4) durch Abstandshalter (9) von den Flächen der Glasscheibe entfernt gehalten werden.

4. Vorrichtung für das Halten von Glasscheiben nach Anspruch 3, **dadurch gekennzeichnet, daß** die Abstandshalter (9) aus Hüllen bestehen, die aus einem hitzebeständigen Gewebe oder Filz hergestellt sind.

5. Vorrichtung für das Halten von Glasscheiben nach Anspruch 4, **dadurch gekennzeichnet, daß** das hitzebeständige Gewebe Asbest oder feuerfeste Keramikfasern zur Grundlage hat.

6. Vorrichtung für das Halten von Glasscheiben nach einem der vorhergehenden Ansprüche, **dadurch gekennzeichnet, daß** die Halteseile (4) durch das Gewicht der Glasscheibe (1) gespannt sind.

7. Vorrichtung für das Halten von Glasscheiben nach einem der vorhergehenden Ansprüche, **dadurch gekennzeichnet, daß** die Halteseile (4) Drähte aus feuerfestem Stahl, insbesondere rostfreiem Stahl, oder aus einer Chrom-Nickel-Legierung sind.

8. Vorrichtung für das Halten von Glasscheiben nach einem der vorhergehenden Ansprüche, **dadurch gekennzeichnet, daß** sie wenigstens einen gelenkigen Tragbalken (13) enthält.

9. Vorrichtung für das Biegen von Glasscheiben, in der die Glasscheibe (1) von einer Haltevorrichtung nach einem der Ansprüche 1 bis 8 gehalten wird und welche aus einer senkrechten Biegepresse besteht, deren Formen Auflageflächen, die mit Vertiefungen (25, 26) versehen sind, welche die Halteseile (4) aufnehmen, auf der Glasscheibe besitzen.

10. Vorrichtung für das Biegen von Glasscheiben nach Anspruch 9, **dadurch gekennzeichnet, daß** die Vertiefungen (25, 26) eine Breite aufweisen, die wenigstens das Fünffache und vorzugsweise wenigstens das Zehnfache des Durchmessers der Halteseile (4) beträgt.

11. Vorrichtung für das Biegen von Glasscheiben nach Anspruch 10, **dadurch gekennzeichnet, daß** die Vertiefungen (25, 26) eine Tiefe aufweisen, die wenigstens das Doppelte und vorzugsweise wenigstens das Dreifache des Durchmessers der Halteseile (4) beträgt.

12. Vorrichtung für das Biegen von Glasscheiben nach Anspruch 9, in welcher die Glasscheibe (1) von einer Haltevorrichtung nach Anspruch 8 gehalten wird, die zwei Traversen (2, 3) umfaßt, welche an höchstens vier Paaren von Halteseilen (4, 4') und vorzugsweise an zwei Halteseilpaaren (jeweils ein Paar pro Querbalken) aufgehängt sind, **dadurch gekennzeichnet, daß** die Matrizenbiegeform (20) zwei bezüglich einander schwenkbare Elemente enthält, wobei das erste Element (21) den Hauptteil der Glasscheibe anpreßt und anschließend das zweite Element (22) den Seitenteil auf dem Patrizenbereich umbiegt, **und daß** jeder Teil der Glasscheibe mit einer Traverse (2, 3) in Berührung steht, wobei der an einem schwenkbaren Tragbalken aufgehängte Querbalken (3) für den Seitenteil vorgesehen ist.

13. Vorrichtung für das Biegen nach einem der Ansprüche 9 bis 12, **dadurch gekennzeichnet, daß** Zentriereinrichtungen (27) auf den Pressen befestigt und zur Führung der Halteseile (4) bestimmt sind.

14. Verwendung der Vorrichtung nach einem der Ansprüche 9 bis 13 zum Biegen von Glasscheiben, die über 600 mm hoch sind.

15. Verwendung der Vorrichtung nach einem der Ansprüche 9 bis 13 zur Herstellung von Erzeugnissen aus vorgespanntem Glas, das frei von Klemmenabdrücken ist und wenigstens eine zylindrische Fläche enthält, deren Radius kleiner als 150 mm ist.

16. Verwendung nach Anspruch 15, **dadurch gekennzeichnet, daß** die zylindrische Fläche von zwei ebenen Flächen umgeben ist.
